# EUROPEAN PATENT APPLICATION

(11) **EP 3 823 087 A1**
(43) Date of publication of application: **19.05.2021**
(21) Application number: 20204021.8
(22) Date of filing: 27.10.2020
(51) Int. Cl.: H01M 50/581, H01M 50/583, H02H 5/04, H02H 7/18, H02J 7/00

(54) **OVER-TEMPERATURE BATTERY PROTECTION**

(30) Priority: 31.10.2019 SG 20201910161; 13.11.2019 GB 201916492
(71) Applicant: Rolls-Royce plc, London N1 9FX (GB)
(72) Inventor: Zagrodnik, Michael, Derby, Derbyshire DE24 8BJ (GB)
(74) Representative: Rolls-Royce plc

(57) **Abstract**

A temperature-actuated protection device, a battery module comprising the protection device, a battery pack comprising a plurality of series-connected battery modules and a method of protecting a battery pack from thermal runaway are provided. The battery pack 700, 800 comprises a plurality of series-connected battery modules 700a, 700b; 800a, 800b each of which comprises: one or more cells 430₁₋ₙ; a fuse 431 connected in series with the one or more cells 430₁₋ₙ; and a temperature activated protection device 432 connected in parallel across the one or more cells 430₁₋ₙ and the fuse 431 and comprising a thermally responsive component 433 configured to sense a temperature of the battery module. Each protection device 432 is configured, responsive to a temperature sensed by its thermally responsive component 433 exceeding a temperature threshold, to automatically create a short circuit across the one or more cells 430₁₋ₙ across which it is connected and to blow the fuse 431 across which it is connected, thereby isolating its battery module from the other battery modules of the battery pack.

## Description

### Field of the Disclosure

The present disclosure concerns a device for providing over-temperature protection to battery modules, and to battery packs having a number of such battery modules.

### Background

Future aerospace applications such as electric and hybrid electric aircraft will likely use high voltage battery packs made up of a number of series-connected battery modules. These battery packs may be used to power one or more motors used to propel the aircraft and/or to provide power to one or more ancillary systems.

Heating of battery cells beyond their normal operating range can occur for various reasons. For example, a fault may develop in one or more of the modules, or the modules could be exposed to an external source of heat such as a fire, direct sunshine or exhaust gas from a gas turbine engine. Heat from one battery module can spread to others, which could lead to thermal runaway of an entire battery pack. Heating also creates a risk of electric shock, for example by causing damage to electrical insulation and structures that support the cells and bus bars.

Clearly it is desirable to protect against the consequences of excessive cell heating. To this end, battery packs may be associated with a Battery Management System (BMS) which monitors the temperatures of the battery cells and, for example, controls a breaker to isolate modules that are overheating. However, a BMS is typically a complex microprocessor-based system that is vulnerable to failure or loss of power.

### Summary

It would be desirable for batteries to have a hardware-based second layer of protection, especially for aerospace applications where functional design assurance is necessary.

Furthermore, it would be desirable for such a hardware-based layer of protection to isolate overheating battery modules, or battery modules which are vulnerable to thermal runaway.

According to a first aspect there is provided a battery pack protected against thermal runaway. The battery pack comprises a plurality of series-connected battery modules each of which comprises: one or more cells; a circuit breaking component such as a fuse connected in series with the one or more cells; and a temperature activated protection device connected in parallel across the one or more cells and the circuit breaking component. The temperature activated protection device comprises a thermally responsive component sensitive to a temperature of the battery module. Each protection device is configured, responsive to a temperature sensed by its thermally responsive component exceeding a temperature threshold, to automatically create a short circuit across the one or more cells across which it is connected and to activate the circuit breaking component across which it is connected, thereby isolating its battery module from the other battery modules of the battery pack.

In an arrangement, the thermally responsive component has a first state and a second state. The thermally responsive component may be configured, responsive to the temperature exceeding the temperature threshold, to automatically change from the first state to the second state and thereby cause the protection device to create the short circuit and activate the circuit breaking component.

In an arrangement, each protection device further comprises a semiconductor switching device having a normally non-conductive state and a conductive state. The temperature sensitive component may be configured, responsive to the temperature exceeding the temperature threshold, to automatically switch the semiconductor switching device from the non-conductive state to the conductive state to create the short circuit across the one or more cells and activate the circuit breaking component.

In an arrangement, the thermally responsive component is connected to a gate terminal of the semiconductor switching device. The thermally responsive component may, responsive to the temperature exceeding the temperature threshold, automatically switch the semiconductor switching device from the non-conductive state to the conductive state.

In an arrangement, each protection device further comprises a bypass current path connected in parallel across the one or more cells and the fuse so that current can bypass the cells and fuse of the module if the fuse is blown. The bypass current path may include a diode arranged so that the battery pack can discharge through the bypass path but cannot recharge through the bypass path.

In an arrangement, each of the temperature activated protection devices comprises: a first circuit branch comprising a semiconductor switching device having a gate terminal and a normally non-conducting state; and a second circuit branch comprising the thermally responsive component. The thermally responsive component may be a thermally actuated switch and may be connected to the gate terminal of the semiconductor switching device. The thermally actuated switch may, responsive to the temperature exceeding the temperature threshold, automatically switch from a first state to a second state and thereby switch the semiconductor switching device from its normally non-conducting state to its conducting state in which the semiconductor switching device creates the short circuit and activates the circuit breaking component.

In an arrangement, the second circuit branch further comprises, in series with the thermally actuated switch and the gate terminal of the semiconductor switching device, a resistor and/or a diode.

In an arrangement, the first circuit branch further comprises, connected in parallel across the semiconductor switching device, a component for preventing accidental turn-on of the semiconductor switching device. The component may act as a dv/dt filter. The component may comprise a resistor in series with a capacitor.

In an arrangement, the first circuit branch further comprises an inductive component for limiting current rise in the semiconductor switching device.

In an arrangement, the second circuit branch further comprises, between the thermally actuated switch and the gate terminal of the semiconductor switching device, a component for conditioning a voltage at the gate terminal for preventing false turn-on of the semiconductor switching device. The component may comprise a capacitor and a resistor connected in parallel.

In an arrangement, the second circuit branch further comprises, between the thermally actuated switch and the gate terminal of the semiconductor switching device, a component for providing overvoltage and/or reverse polarity protection to the gate terminal. The component may comprise a diode or a Zener diode.

In an arrangement, the first circuit branch further comprises, in series with the semiconductor switching device, a resistor for limiting a current flowing through the semiconductor switching device.

In an arrangement, the first circuit branch comprises a diode in series with the semiconductor switching device.

In an arrangement, the semiconductor switching device comprises a thyristor, a silicon controlled rectifier or a transistor. The transistor may be an Insulated Gate Bipolar Transistor (IGBT).

In an arrangement, the thermally responsive component sensitive to the temperature of the battery module is a first thermally responsive component. Each of the temperature activated protection devices may further comprise a second thermally responsive component configured sensitive to a temperature of a neighbouring battery module. Each protection device may be further configured, responsive to a temperature sensed by its second thermally responsive component exceeding a temperature threshold, to automatically create a short circuit across the one or more cells across which the protection device is connected and to activate the circuit breaking component across which it is connected, thereby isolating its battery module from the other battery modules of the battery pack.

In an arrangement, the neighbouring battery module is an immediately neighbouring battery module.

In an arrangement, the second thermally responsive component is connected in parallel across the first thermally responsive component.

In an arrangement, each of the thermally actuated protection devices is triggerable by a Battery Management System (BMS).

According to a second aspect, there is provided a battery module protected against thermal runaway. The battery module comprises: one or more cells; a circuit breaking component connected in series with the one or more cells; and a temperature activated protection device connected in parallel across the one or more cells and the circuit breaking component. The temperature actuated protection device comprises a thermally responsive component sensitive to a temperature of the battery module. The protection device is configured, responsive to a temperature sensed by its thermally responsive component exceeding a temperature threshold, to automatically create a short circuit across the one or more cells and to activate the circuit breaking component.

According to a third aspect, there is provided a temperature actuated protection device for protecting a battery module against thermal runaway. The protection device comprises a thermally responsive component for sensing a temperature of the battery module. The protection device is configured, responsive to a temperature sensed by its thermally responsive component exceeding a temperature threshold, to automatically create a short circuit across one or more cells of the battery module across which it is connected and to activate a circuit breaking component across which it is connected.

According to a fourth aspect, there is provided an aircraft comprising a battery pack according to the first aspect, a battery module according to the second aspect, or a temperature actuated protection device according to the third aspect.

According to a fifth aspect, there is provided a method of protecting a battery pack comprising a plurality of series-connected battery modules against thermal runaway. The method comprises: for each of the plurality of battery modules, electrically connecting one or more cells of the battery module to a circuit breaking component in series. The method further comprises: for each of the plurality of battery modules, electrically connecting a temperature actuated protection device in parallel with the one or more cells and the circuit breaking component, wherein the protection device comprises a thermally responsive component sensitive to a temperature of the battery module. The method further comprises: for at least one of the plurality of battery modules, automatically creating, by the protection device, responsive to a temperature sensed by the thermally responsive component exceeding a predetermined temperature threshold, a short circuit across the one or more cells across which it is connected and activating the circuit breaking component across which it is connected, thereby isolating its battery module from the other battery modules of the battery pack.

The skilled person will appreciate that except where mutually exclusive, a feature described in relation to any one of the above aspects may be applied mutatis mutandis to any other aspect. Specifically, the optional features described above for the first aspect could equally be applied to each of the second, third, fourth and fifth aspect but are not repeated for brevity. Furthermore except where mutually exclusive any feature described herein may be applied to any aspect and/or combined with any other feature described herein.

### Brief Description of the Drawings

Embodiments will now be described by way of example only, with reference to the Figures, in which:
**Figure 1** is a sectional side view of a gas turbine engine;
**Figure 2** is a schematic illustration of a hybrid electric aircraft propulsion system;
**Figure 3** is a schematic illustration of a purely electric aircraft propulsion system;
**Figure 4** is a circuit diagram of a battery module incorporating a temperature actuated protection device according to the present disclosure;
**Figures 5A and 5B** are circuit diagrams illustrating the operation of the protection device of Figure 4;
**Figure 6** is a circuit diagram illustrating another arrangement of the thermally actuated protection device according to the present disclosure;
**Figure 7A** is a circuit diagram illustrating a battery pack comprising a plurality of series-connected battery modules according to the present disclosure;
**Figure 7B** is a circuit diagram illustrating a battery pack comprising a plurality of series-connected battery modules according to the present disclosure, including a bypass circuit path;
**Figures 7C and 7D** are circuit diagrams illustrating the operation of the bypass circuit path; and
**Figure 8** is a circuit diagram illustrating an arrangement for isolating a battery module and its neighbouring battery modules in the event of thermal runaway according to the present disclosure.

### Detailed Description

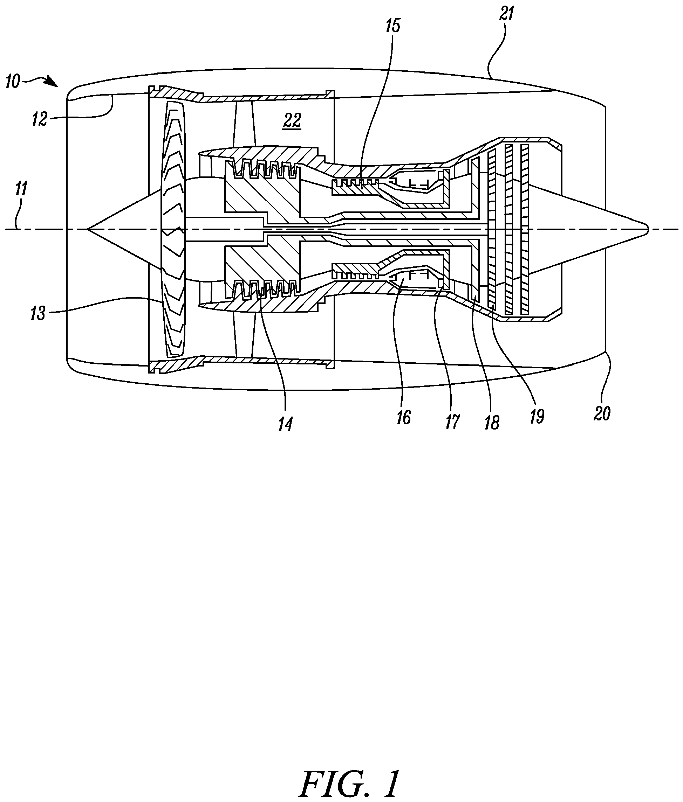

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

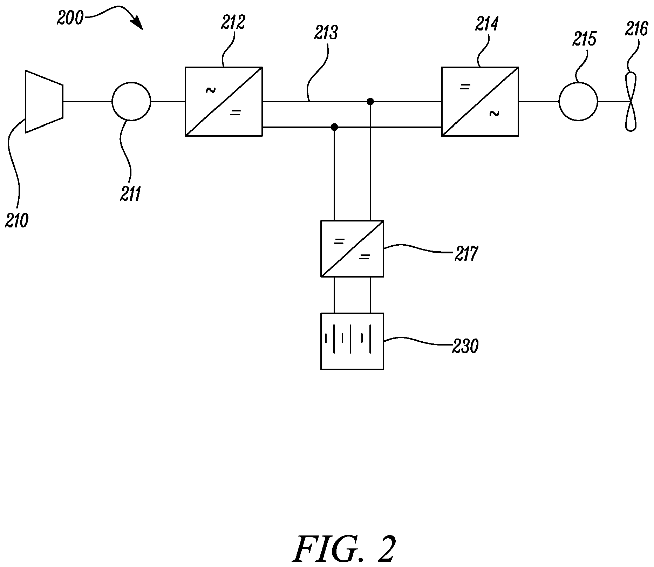

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. Now referring to Figure 2, the propulsion system of a hybrid electric aircraft is generally indicated 200 and incorporates both an engine 210, such as the gas turbine engine 10 described above with reference to Figure 1, and a battery pack 230. Both the engine 210 and the battery pack 230 are used as energy sources to power a motor-driven propeller 216, as well as ancillary electrical systems (not shown).

The propulsion system 200 of the hybrid electric aircraft will typically further comprise a generator 211, an AC/DC converter 212, a high voltage DC (HVDC) distribution bus 213, a DC/AC converter 214, a motor 215 that drives the propeller 216, and a DC/DC converter 217.

A shaft of the engine 210 is coupled to and drives the rotation of a shaft of the generator 211 which thereby produces alternating current. The AC/DC converter 212, which faces the generator 211, converts the alternating current into direct current which is fed to various electrical systems via the HVDC distribution bus 213. These electrical systems include the motor 215 that drives the propeller 216. The motor 215 will typically be a synchronous motor that interfaces with the HVDC distribution bus 213 via the DC/AC converter 214.

The battery pack 230, which may be made up of a number of lithium ion battery modules connected in series, is connected to the HVDC distribution bus 213 via the DC/DC converter 217. The DC/DC converter 217 converts between a voltage of the battery pack 230 and a voltage of the HVDC distribution bus 213. In this way, the battery pack 230 can replace or supplement the power provided by the engine 210 (by discharging and thereby feeding the HVDC distribution bus 213) or can be charged using the power provided by the engine 210 (by being fed by the HVDC distribution bus 213).

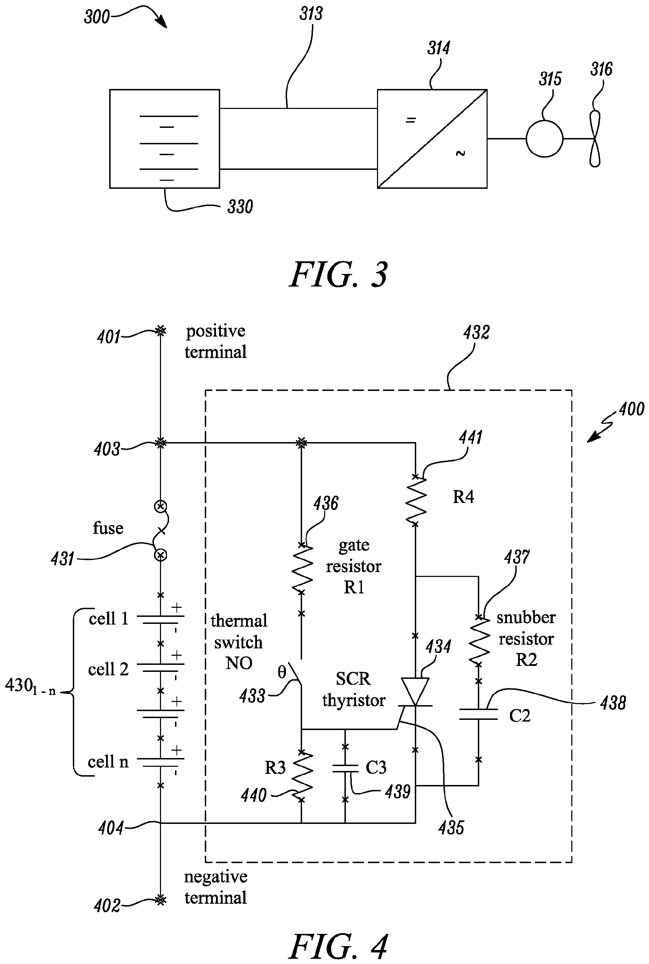

A battery pack will also appear in the propulsion system of a purely electric aircraft, generally indicated as 300 in Figure 3. The battery pack 330 feeds a HVDC distribution bus 313, possibly via DC/DC converter (not shown), which delivers power to one or more synchronous motors 315 via a DC/AC converter 314. The one or more motors 315 drive the one or more propellers 316 that propel that aircraft.

Battery packs used in these applications may have high terminal voltages, for example 1kV to 3kV. The use of high voltages advantageously allows for a reduction in the weight of the power distribution cabling, but it does create risk factors. For example, a fault within one or more of the battery modules could lead to cell overheating, which in turn creates a risk of thermal runaway and electric shock. Some exemplary reasons for cell heating and thermal runaway include:
- Exposure to an external source of heat such as fire, direct sunshine or exhaust gas from a gas turbine.
- Loss of normal cooling to a battery module, for example a loss of cooling air flow due to a vent blockage; a loss of cooling liquid flow due to a pipe blockage; or a loss of thermal contact between a cell and its heatsink.
- Over-charging of cells, even at low current levels, or the use of an excessively high charging current, which could generate heat at a greater rate than the system is able to cool the cells.
- Abnormally high discharge current, which could generate heat at a greater rate than the system is able to cool the cells.
- Internal short circuit. An internal short circuit can be caused by dendrite formation, which can happen if the module is subject to over-discharging or charging at cold temperatures.
- External short circuit.
- Mechanical damage to a cell, which could cause internal short circuit.
- Poor electrical contact leading to localized heating. For example, loosening of the tab screws, insufficient torque on connectors, a faulty separator, poorly welded tabs and tab corrosion can all cause poor electrical contact to one or more cells of a battery module.
- Manufacturing or material defects.

It is clearly desirable to reduce the risks associated with cell heating. Detecting and isolating faulty battery modules early enough may avert thermal runaway. Even if thermal runaway cannot be averted, isolating faulty modules reduces the risk of electric shock, which is important for passengers, crew and first responders following an incident.

Systems may utilize a Battery Management System (BMS) that monitors the temperatures of the battery cells and, for example, controls a breaker to isolate modules that are overheating. However, a BMS is a complex microprocessor-based system that is vulnerable to failure (including measurement failures) or loss of power, leading to unsafe operation or failure to report errors.

Systems may also utilize a main fuse and breaker to protect against external short circuits. However, a main fuse or breaker is only able to isolate the battery stack as a whole, and not individual modules. Furthermore, if the short circuit current is low, as in the case of a high impedance fault, the fuse or breaker may take a very long time to blow or trip. Such a delay may mean the effect of the fuse or breaker is too late to avert thermal runaway.

To address these and/or other problems, the present disclosure provides a battery protection device that automatically isolates battery modules that experience or are vulnerable to heating and thermal runaway. The protection device is autonomous in that it does not rely on the operation of others system such as a BMS or a separate source of power, so provides a hardware-based layer or protection that can be relied upon if other systems fail. It is also lightweight, which is an important consideration in aerospace applications.

### Battery Module and Protection Device

With reference to Figure 4, a battery module protected against thermal runaway is generally indicated at 400. The battery module has one or more cells 430₁, 430₂...430ₙ, which in this arrangement are connected in series but could also be connected in parallel or a mixture of series and parallel. The battery module 400 has a positive terminal 401 and a negative terminal 402, allowing the battery module 400 to be connected to other similar battery modules to form a battery pack and/or to be connected to a load.

The battery module 400 also includes a circuit breaking component 431 which is connected, in series, to the battery cells 430₁₋ₙ. In Figure 4 the circuit breaking component 431 is a fuse, but it could be another component such as a breaker. The circuit breaking component 431 is configured to interrupt the flow of current to the battery cells 430₁₋ₙ when it subject to an overcurrent condition, for example by blowing (in the case of a fuse) or opening (in the case of a breaker switch) as is well understood by those skilled in the art. The rating of the fuse will be selected according to the system requirements, for example taking into account the preferred charge and discharge current of the battery module 400.

The battery module 400 is protected against thermal runaway by a temperature actuated protection device 432, which is generally indicated in Figure 4 by the box 432 with dashed lines. The protection device 432 is connected in parallel across the cells 430₁₋ₙ and the fuse 431 at points 403 and 404. The protection device 432 and its operation will be described in more detail below but, in brief, if the battery module 400 experiences an over-temperature condition, the protection device 432 automatically creates a short circuit across the cells 430₁₋ₙ and the fuse 431 and delivers a current that causes the fuse 431 to blow. To this end, the thermally actuated protection device 432 includes a thermally responsive component 433 which is sensitive to the temperature of the module 400, and automatically causes the protection device 432 to create the short circuit if the temperature exceeds a temperature threshold.

In more detail, the thermally actuated protection device 432 includes the thermally responsive component 433 which is in thermal contact with the module 400. The thermally responsive component 433 has at least two states, and transitions from a first state to a second state in the event that its temperature exceeds a threshold. The threshold will be chosen according to the system requirements, such as an acceptable range of operating temperatures and on the level of thermal contact between the thermally responsive component 433 and the module.

In the arrangement of Figure 4 the thermally responsive component 433 is a thermal switch, for example a bimetallic switch or a thermistor. The thermal switch is normally open, as shown in Figure 4, and no (or substantially no) current can flow through the protection device 432. However, the thermal switch closes above the threshold temperature, causing the protection device 432 to provide a short circuit across the cells 430₁₋ₙ and the fuse 431.

In order to provide a current that is sufficiently large to blow the fuse 431, the protection device 432 typically also includes a semiconductor switching device 434. The semiconductor switching device 434, which in Figure 4 is a silicon controlled rectifier (SCR) or thyristor, only conducts current after it has been triggered by injection of a sufficiently high current to its gate terminal 435. To this end, the thermally responsive component 433 is connected to the gate terminal 435. Below the temperature threshold the gate current is zero so the SCR 434 does not conduct. Above the temperature threshold, however, the thermally responsive component 433 allows sufficient current to pass through the gate 435 so as to trigger the SCR 434 to conduct. The SCR has a high current carrying capability, so shorts out the cells 430₁₋ₙ across the fuse with a sufficient current to blow the fuse 431.

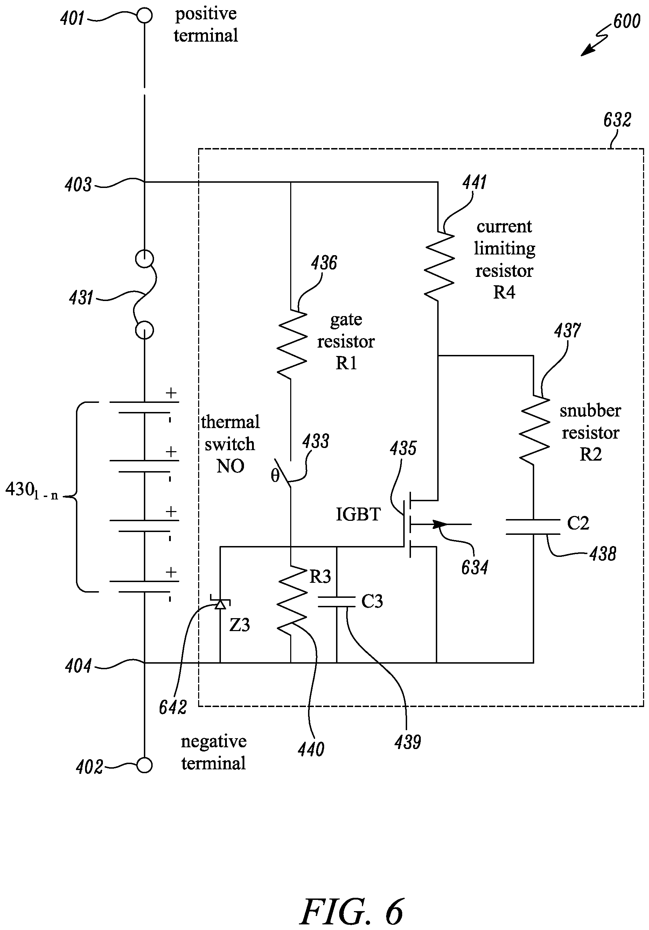

The semiconductor switching device 434 will be selected so as to have a gate current trigger threshold appropriate to the system. Likewise, the semiconductor switching device 434 will be selected to provide a sufficiently large l²t to blow the fuse 431. While an SCR or thyristor 434 is shown in the arrangement of Figure 4, other semiconductor switching devices, including a transistor, could be used. For example, as shown in Figure 6, an Insulated Gate Bipolar Transistor (IGBT) 634 could be used instead of an SCR or thyristor.

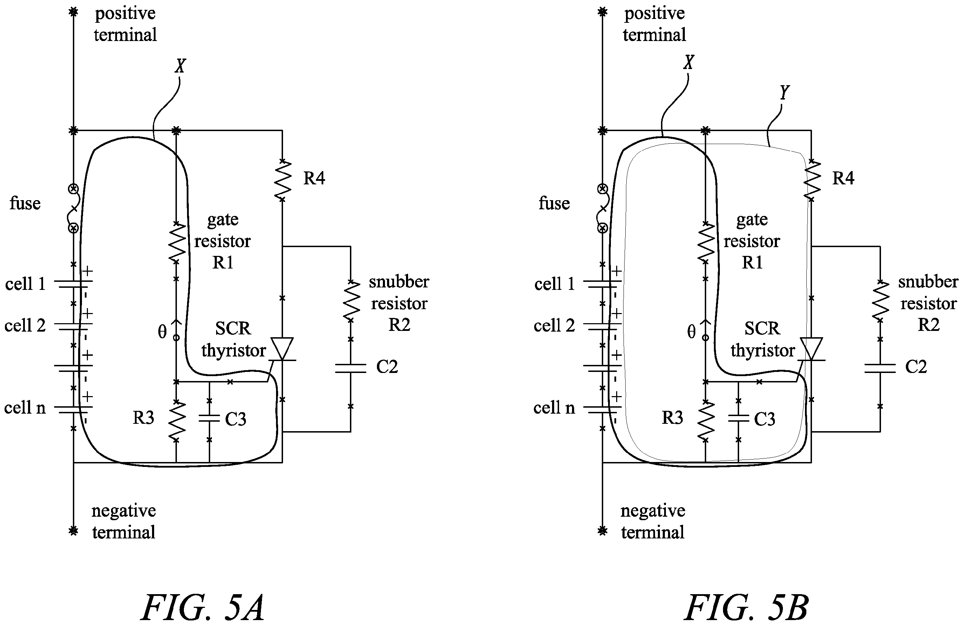

The operation of the protection device 432 when the temperature of the battery module 400 sensed by the thermally responsive component 433 has exceeded the temperature threshold is illustrated in Figures 5A-5B. Referring first to Figure 5A, normally-open thermal switch 433 has closed because the temperature of the module 433 has exceeded the temperature threshold. Consequently, current can flow along the path generally indicated by line 'X' in Figure 5A. The current through path X is not large enough to blow the fuse 431, but the resulting current injected into the gate 435 of the semiconductor switching device 434 is sufficient to trigger the semiconductor switching device 434 to conduct current. Consequently, referring to Figure 5B, current can also flow along the path generally indicated by line 'Y'. Due to the high current carrying capability of the semiconductor switching device 434, the current through path Y is large enough to blow the fuse 431, which isolates the cells 430₁₋ₙ of the battery module 400 from other battery modules and/or loads that may be connected to the positive and negative terminals 401, 402.

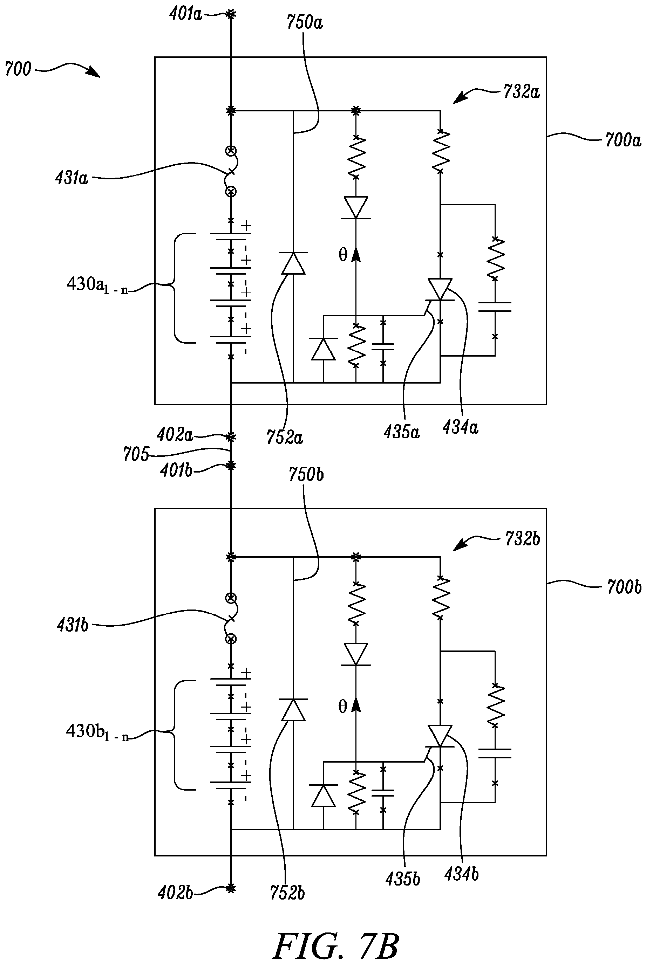

Returning to Figure 4, the thermally actuated protection device 432 is shown to include some optional additional components:
- A resistor 436 may be provided in series with the thermally responsive component 433 and its connection to the gate 435 of the semiconductor switching device 434 to adjust the level of current used to trigger the semiconductor switching device 434.
- Components may be provided to reduce the likelihood of an accidental turn-on of the semiconductor switching device 434 in the event of voltage transients. A dv/dt filter, which in Figure 4 takes the form of a snubber (a series-connected resistor 437 and capacitor 438 connected in parallel across the SCR 434), may be provided.
- The thermally actuated protection device 432 may include components to prevent accidental turn-on of the semiconductor switching device 434. In Figure 4 a capacitor 439 and a resistor 440 connected in parallel between the input to the gate terminal 435 and the negative terminal 402 for this purpose.
- The thermally actuated protection device 432 may include a current limiting resistor 441 to limit the short circuit current level. An inductor (not shown) may be connected in series with the resistor 441 to provide di/dt protection of the SCR, limiting the rate of rise of current in the device during turn on.
- The thermally actuated protection device 432 may include a diode (not shown in Figure 4 but shown in Figures 7B-7D) to protect the gate against reverse polarity across the gate-cathode junction of the SCR.
- Components may be provided to reduce the likelihood of an accidental turn-on of the semiconductor switching device 434 in the event of current transients.
- If the semiconductor switching device 434 does not possess substantial reverse blocking capability then this capability may be introduced by adding a diode in series with the switching device. In Figure 4 the SCR 434 possesses reverse blocking capability and therefore a reverse blocking diode is not required, and so none is shown. Reverse blocking may be required to prevent the reverse flow of current from the negative terminal 402 to the positive terminal 401 bypassing the blown fuse 431.
- Similar reverse blocking functionality may be provided by a diode (not shown) in series with the thermally responsive component 433 and, if the present, the resistor 436.

Figure 6 shows a battery module 600 protected by a thermally actuated protection devices 632 having an alternative arrangement. This module 600 and its protection device 632 has many of the same components as, and works in substantially the same way as, the module 400 and protection device 432 of Figure 4. Only the additional and alternative components not shown in Figure 4 will now be described.
- As mentioned above and as shown in Figure 6, the semiconductor switching device may be an IGBT 634 instead of an SCR or thyristor 434. In this case, although Figure 6 shows a resistor 437 and a capacitor 438 for accidental turn-on protection, different turn-on protection may be used.
- Protection device 632 includes a component for providing overvoltage and reverse polarity protection between the gate and emitter, in this case a Zener diode 642 connected between the input to the gate terminal 435 and the negative terminal 402.

Alternative and additional components for implementing the thermally actuated protection device 432, 632 described above with reference to Figures 4-6 may be used and will occur to those skilled in the art.

### Battery Pack and Module Bypass

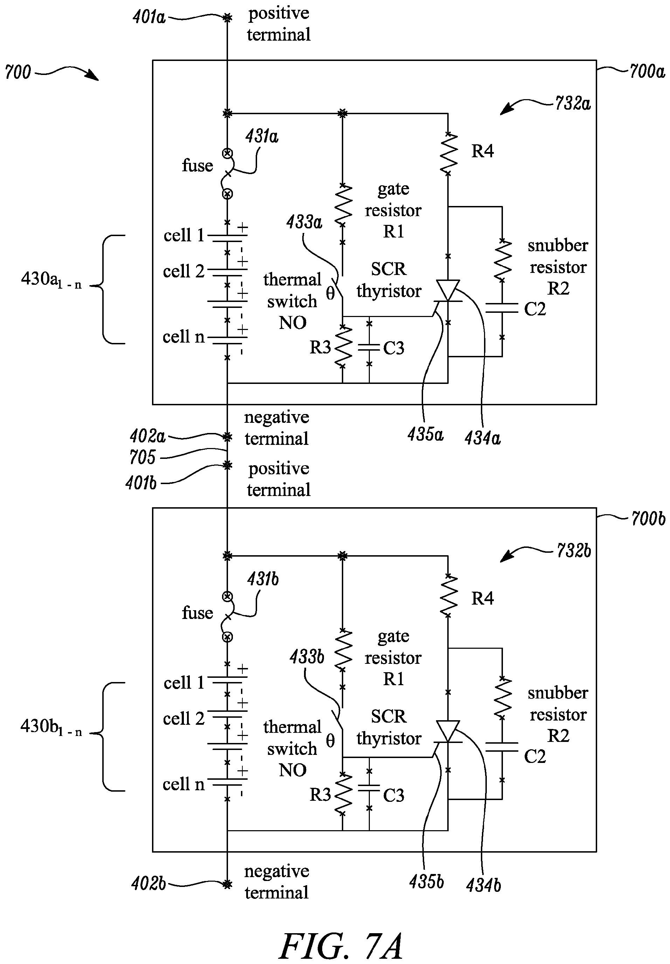

Referring to Figures 7A-D, a battery pack comprising a plurality of series-connected battery modules is generally indicated at 700. For simplicity the battery pack 700 is illustrated as including only two series-connected battery modules 700a, 700b connected at 705, but it will be understood that the battery pack could have any number of modules. Each module 700a, 700b has cells 430a₁₋ₙ, 430b₁₋ₙ in series with a fuse 431a, 431b, and also has a protection device 732a, 732b connected in parallel across the cells and fuse.

While the thermally actuated protection devices 732a, 732b of Figures 7A-D are illustrated as having an SCR or thyristor 434 as in Figure 4, they could equally have an IGBT 634 as in Figure 6. The thermally actuated protection devices 732a, 732b may be the same as or differ from the specific examples described herein.

It should be appreciated from Figures 7A-D that in the event that the cells 430a₁₋ₙ of one battery module 700a are isolated due an over-temperature condition in module 700a, there may still be a current path between the positive terminal 401a and the negative terminal 402a of the battery module 700a. This means that the loss of one or more battery modules 700a of the battery pack 700 may not result in the complete loss of function of the entire battery pack 700, as the remaining, working, battery modules 700b may not be totally isolated from each other. This may be of critical importance in situations where the continuity of the power supply is required for safety. For example, sudden loss of power during take-off could have dire consequences and so it is important that when one module is isolated, the remaining modules remain connected. While the loss of a series connected module will result in a reduction in the terminal voltage of the battery pack, the DC/DC converter 217 can accommodate this.

First referring to Figure 7A, current may still be able to flow between the positive terminal 401a and the negative terminal 402a via an available path in the protection device 732a.

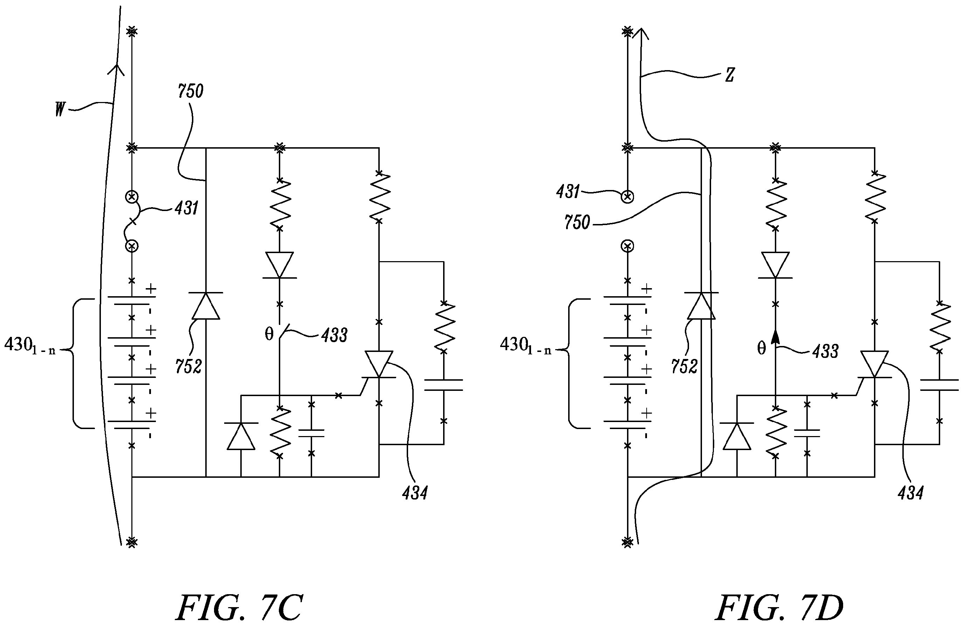

Now referring to Figures 7B-D, it may be preferable to provide an additional separate current path for module bypass. Specifically, in Figure 7B the protection devices 732a, 732b each comprise a path 750a, 750b connected in parallel with their semiconductor switching device 434a, 434b and thermal switch 433a, 433b. In normal operation discharge current will flow between the positive and negative terminals 401a, 402a along path W as shown in Figure 7C. However, if the module 700a overheats such that the thermal switch 433a closes and the fuse 431a blows, current will flow between the positive and negative terminals 401a, 402a along path Z as shown in Figure 7D. The use of a separate path may be desirable to prevent the load current passing through the thermal switch 433 and the current limiting resistor 436, which could cause further heating. It may also be necessary if other paths through the protection device are closed off by diodes, for example.

The bypass paths 750a, 750b are shown to include bypass diodes 752, 752b. This is preferable because it will allow the battery pack 700 to be discharged following the isolation of one or more battery modules, but will block negative current flow through the pack and therefore prevent recharging. In this way, continuity of the power supply during critical situations such as take-off is maintained, but a subsequent recharge is prevented until the battery pack is fixed or replaced.

The battery pack 700 can also be associated with a BMS (not shown). In this case the BMS may be capable of intentionally triggering the protection devices 732a, 732b so that one or more of the modules 700a, 700b can be isolated from the other modules as desired. For example, if the BMS detects an overcharging condition but the main contactor or breaker fails to open, the BMS may force trip a fuse in one or more of the modules by activating the associated semiconductor switching devices. As another example, a BMS may detect that the temperature of a module 700a, while below the temperature threshold required to trigger its protection device 732a, is increasing. The BMS may therefore intentionally trigger the semiconductor switching device 434a to isolate the module 700a before the temperature rise develops any further. This could be achieved by, for example, providing a BMS-controlled relay in parallel with the thermal switch 433.

### Arrangement for Isolating Neighbouring Modules

In the event that one battery module experiences an over-temperature condition, it may be preferable to isolate not just the over-temperature module but also one or more neighbouring modules as a precaution. For example, even if a given battery module is functioning normally at a normal temperature, it may be vulnerable to heat spread from an overheating battery module. This could, eventually, lead to thermal runaway of a larger part or even the entire battery pack. Isolating the neighbouring modules can therefore help contain a local problem and prevent it developing into a wider problem. As another example, if an over-temperature module enters into thermal runaway resulting in insulation damage and a short circuit to ground, it may be desirable to isolate the neighbouring module so that is not capable of contributing current to this fault.

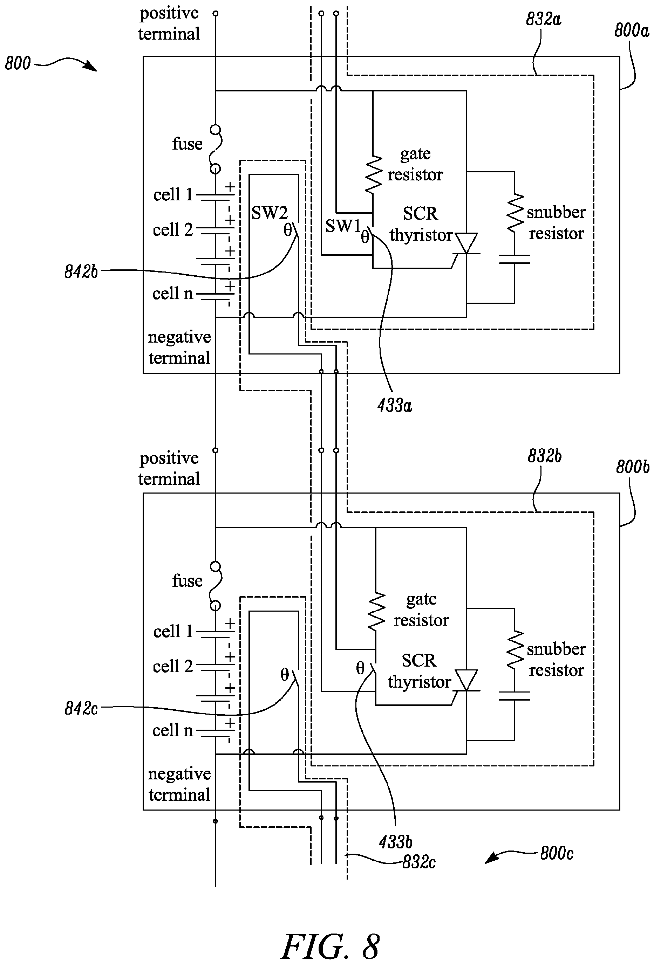

Figure 8 illustrates a battery pack 800 made up of battery modules 800a, 800b, 800c that incorporate thermally actuated protection devices 832a, 832b, 832c to protect against such an occurrence. It is noted that only a portion of the protection device 832a of module 800a is visible in Figure 8, and that module 800c is not visible at all except a portion of its protection device 832c. The arrangement will be described with reference to module 800b and its protection device 832b which are clearly visible in Figure 8. The protection device 832b is generally indicated by dashed lines, which can be seen to partially extend outside of the battery module 800b into neighbouring module 800a.

As can be seen, the protection device 832b of battery module 800b includes a second thermally responsive component 842b. The second thermally responsive component 842b is in thermal contact with one of the battery modules that neighbours module 800b. In this case it is in thermal contact with the immediately neighbouring and above module 800a. Since the second thermally responsive component 842b is in thermal contact with neighbouring module 800a, it is sensitive to the temperature of the neighbouring module 800a.

The second thermally responsive component 842b, which in this case is a normally-open thermal switch like the thermal switch 833 described above, is connected in parallel across the first thermally responsive component 833b. In the event that the temperature of the neighbouring module 800a exceeds a temperature threshold associated with the thermal switch 842b, the thermal switch 842b closes. This provides a current path around the first thermal switch 833b so that current is provided at the gate 835b of the semiconductor switching device 834b even if the battery module 800b is itself below the temperature threshold associated with the first thermal switch 833b. The current at the gate 835b triggers the semiconductor switching device 834b to conduct current, which short circuits the cells 830b₁₋ₙ across the fuse 830b and blows the fuse, thus isolating the cells 830b₁₋ₙ of battery 800b. In this way, an over-temperature condition in a neighbouring battery module 800a triggers the thermally actuated protection device 832b of battery module 800b.

While in this example the second thermally responsive component 842b of the protection device 832b is thermally coupled to the immediately neighbouring and above module 800a, it could equally have been thermally coupled with immediately neighbouring and below module 800c. The second thermally responsive component 842b could also be thermally coupled to a next nearest neighbour, or even a battery module further away than the next nearest neighbour if, for example, there is a particularly strong thermal path between two relatively electrically distant modules.

The protection device 832b of the battery module 800b could include more than two thermally responsive components 433b, 842b. For example, the protection device 832b could include a third thermally responsive component in parallel with the first and second thermally responsive components 833b, 842b and thermally coupled to a different neighbouring module, for example module 800c. In this way, the protection device 832b could be configured to create a short circuit across the cells 430b₁₋ₙ and fuse 431b of its module 800b if its temperature or the temperature of any of its neighbouring modules 800a, 800c experience an over-temperate condition.

The temperature threshold associated with the second thermally responsive component 842b (and indeed the third, fourth etc. thermally responsive component) may be the same or different from the temperature threshold associated with the first thermally responsive component 433b. In one example the temperature threshold associated with the second thermally responsive component 842b is higher than the temperature threshold associated with the first thermally responsive component 433b because an over-temperature condition in a neighbouring module 800a may only be a concern if the neighbouring module 800a is particularly high.

It is noted that while the thermally actuated protection devices 832a-c of Figure 8 are illustrated as the same as, other than the second thermally responsive component 842a-c, 432 of Figure 4, they could equally correspond to the protection device 632 of Figure 6. They could also differ from the specific examples described herein.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A battery pack (700; 800) protected against thermal runaway, the battery pack comprising a plurality of series-connected battery modules (700a, 700b; 800a, 800b) each of which comprises:
one or more cells (430₁₋ₙ);
a circuit breaking component (431) connected in series with the one or more cells; and
a temperature activated protection device (732a, 732b; 832a, 832b) connected in parallel across the one or more cells and the circuit breaking component and comprising a thermally responsive component (433) sensitive to a temperature of the battery module,
wherein each protection device is configured, responsive to a temperature sensed by its thermally responsive component exceeding a temperature threshold, to automatically create a short circuit across the one or more cells across which it is connected and to activate the circuit breaking component across which it is connected, thereby isolating its battery module from the other battery modules of the battery pack.

2. The battery pack (700; 800) of claim 1, wherein the thermally responsive component (433) has a first state and a second state and is configured, responsive to the temperature exceeding the temperature threshold, to automatically change from the first state to the second state and thereby cause the protection device to create the short circuit and activate the circuit breaking component.

3. The battery pack (700; 800) of claim 1 or claim 2, wherein each protection device (732a, 732b; 832a, 832b) further comprises a semiconductor switching device (434; 634) having a normally non-conductive state and a conductive state, and wherein the thermally responsive component (433) is configured, responsive to the temperature exceeding the temperature threshold, to automatically switch the semiconductor switching device from the non-conductive state to the conductive state to create the short circuit across the one or more cells (430₁₋ₙ) and activate the circuit breaking component (431).

4. The battery pack (700; 800) of any one of the preceding claims, wherein each protection device (732a, 732b; 832a, 832b) further comprises a bypass current path (750) connected in parallel across the one or more cells (430₁₋ₙ) and the circuit breaking component (431) so that current can bypass the cells and circuit breaking component of the module if the circuit breaking component is activated.

5. The battery pack (700; 800) of claim 4, wherein the bypass current path (750) includes a diode (752) arranged so that the battery pack can discharge through the bypass path but cannot recharge through the bypass path.

6. The battery pack (700; 800) of any one of the preceding claims, wherein each of the temperature activated protection devices (732a, 732b; 832a, 832b) comprises:
a first circuit branch comprising a semiconductor switching device (434; 634) having a gate terminal (435) and a normally non-conducting state; and
a second circuit branch comprising the thermally responsive component (433), the thermally responsive component being a thermally actuated switch connected to the gate terminal of the semiconductor switching device,
wherein, responsive to the temperature exceeding the temperature threshold, the thermally actuated switch automatically switches from a first state to a second state and thereby switches the semiconductor switching device from its normally non-conducting state to its conducting state in which the semiconductor switching device creates the short circuit and activates the circuit breaking component (431).

7. The battery pack (700; 800) of claim 6, wherein the first circuit branch further comprises, connected in parallel across the semiconductor switching device (434; 634), a component (437, 438) for preventing accidental turn-on of the semiconductor switching device.

8. The battery pack (700; 800) of claim 6 or claim 7, wherein the second circuit branch further comprises, between the thermally actuated switch (433) and the gate terminal (435) of the semiconductor switching device (434; 634), a component (439, 440) for preventing false turn-on of the semiconductor switching device.

9. The battery pack (700; 800) of any one of the preceding claims, wherein each of the thermally actuated protection devices (732a, 732b; 832a, 832b) is triggerable by a Battery Management System.

10. The battery pack (800) of any one of the preceding claims, wherein the thermally responsive component (433) sensitive to the temperature of the battery module (800a, 800b) is a first thermally responsive component (433), wherein each of the temperature activated protection devices (832a, 832b) further comprises a second thermally responsive component (842b) sensitive to a temperature of a neighbouring battery module, and wherein each protection device is further configured, responsive to a temperature sensed by its second thermally responsive component exceeding a temperature threshold, to automatically create a short circuit across the one or more cells across (430₁₋ₙ) which the protection device is connected and to activate the circuit breaking component (431) across which it is connected, thereby isolating its battery module from the other battery modules of the battery pack.

11. The battery pack (800) of claim 10, wherein the neighbouring battery module is an immediately neighbouring battery module.

12. The battery pack (800) of claim 10 or claim 11, wherein the second thermally responsive component (842) is connected in parallel across the first thermally responsive component (433).

13. An aircraft propulsion system (10, 200, 300) comprising the battery pack (700; 800) of any one of the preceding claims.

14. An aircraft comprising the battery pack (700; 800) of any one of claims 1 to 12.

15. A method of protecting a battery pack (700, 800) comprising a plurality of series-connected battery modules (700a, 700b; 800a, 800b) against thermal runaway, the method comprising:
for each of the plurality of battery modules, electrically connecting one or more cells (430₁₋ₙ) of the battery module to a circuit breaking component (431) in series;
for each of the plurality of battery modules, electrically connecting a temperature actuated protection device (432; 632) in parallel with the one or more cells and the circuit breaking component, wherein the protection device comprises a thermally responsive component (433) sensitive to a temperature of the battery module; and
for at least one of the plurality of battery modules, automatically creating, by the protection device, responsive to a temperature sensed by the thermally responsive component exceeding a predetermined temperature threshold, a short circuit across the one or more cells across which it is connected and activate the circuit breaking component across which it is connected, thereby isolating its battery module from the other battery modules of the battery pack.
